# EUROPEAN PATENT SPECIFICATION

(11) **EP 4 348 747 B1**
(45) Date of publication and mention of the grant of the patent: **11.11.2026**
(21) Application number: 22733220.2
(22) Date of filing: 03.06.2022
(51) Int. Cl.: H01M 10/04

(54) **APPARATUS FOR CUTTING AND CONVEYING A STRIP OF MATERIAL FOR THE PRODUCTION OF ELECTRICAL ENERGY STORAGE DEVICES AND RELATIVE METHOD**
VORRICHTUNG UND VERFAHREN ZUM SCHNEIDEN UND TRANSPORTIEREN VON MATERIAL ZUR HERSTELLUNG VON ELEKTRISCHEN SPEICHERELEMENTEN
DISPOSITIF ET PROCÉDÉ POUR COUPER ET TRANSPORTER DES MATÉRIAUX UTILISÉS DANS LA FABRICATION D'ÉLEMENTS DE STOCKAGE D'ÉLECTRICITÉ

(30) Priority: 03.06.2021 IT 202100014459
(43) Date of publication of application: 10.04.2024
(73) Proprietor: Manz Italy S.r.l., 40037 Sasso Marconi (BO) (IT)
(72) Inventor: SALE, Massimiliano, 40037 Sasso Marconi (BO) (IT); ZAMBONELLI, Luca, 40037 Sasso Marconi (BO) (IT); ALONGI, Pasqualino, 40037 Sasso Marconi (BO) (IT); CIRINO, Sergio, 40037 Sasso Marconi (BO) (IT)
(74) Representative: Studio Torta S.p.A.
(86) International application number: PCT/IB2022/055187
(87) International publication number: WO 2022/254391

(56) References cited:
- KR-A- 20150 021 069
- US-B2- 7 578 898

## Description

### Cross-Reference to Related Applications

This patent application is related to Italian Patent Application No. 102021000014459 filed on June 3, 2021.

### Technical Field of the Invention

The present invention relates to an apparatus for cutting and conveying a strip of material, in particular a strip of electrode for the production of electrical energy storage devices, and to a relative method for the production of electrical energy storage devices.

In particular, the present invention is advantageously, but not exclusively, applied to the production of rechargeable batteries, more in particular to the production of planar batteries in metal can or enveloped (commonly called of the pouch type), to which the following description will explicitly refer without thereby losing generality.

### State of the Art

Automatic machines for the production of electrical energy storage devices are known, and in particular of rechargeable batteries or of capacitors.

Rechargeable batteries usually comprise two layers of electrode (cathode and anode) and at least two layers of separator arranged staggered with respect to one another according to an alternated electrode-separator-electrode-separator scheme.

In the case of cylindrical batteries, it is known to feed by means of respective feeding units of the aforementioned automatic machines the strips of electrode and the strips of separator along different feeding paths which all converge towards a rotating winding core, which is configured to retain and wind (generally about an elongated-shaped support) the strips of electrode and the strips of separator arranged staggered with respect to one another, so as to form a cylindrical winding.

In the case of planar batteries in metal can or enveloped, also known as pouch batteries, the strips of electrode and separator are fed along respective feeding paths for converging all of them towards a rolling unit, inside which they are laminated together. If necessary, during the lamination, the aforementioned strips of electrode and separator are arranged between two further protection layers (these too strip-shaped). Such protection layers are configured to protect the strips of electrode and separator inside the rolling unit and are usually removed at the exit from this unit.

Specifically, the strips of electrode and the strips of separator are fed to a pair of input rollers of the rolling unit, in a synchronized manner.

More precisely, each strip of electrode is sequentially cut (singularized) at respective transverse cutting sections, so as to obtain portions of strip (known as plates or blanks) defining the electrodes (for example the cathode or the anode) of each cell which will subsequently compose the planar battery. The portions of strip previously cut are fed to the aforementioned input rollers of the rolling unit, in a synchronous manner with the strips of separator.

Downstream of the rolling unit, in some cases, the multilayer planar strip composed of the two cut strips of electrode (i.e. the electrode plates) and the two strips of separator (still continuous), is cut transversely so as to obtain a sequence of planar cell batteries separated from one another which will be subsequently stacked and enveloped so as to obtain an enveloped planar battery. In other cases, instead, the multilayer planar strip is wound about a flat pin so as to superimpose with precision the electrode plates forming a planar winding.

In order to prepare the electrodes and feed them to the rolling unit, the automatic machines for the production of planar batteries (stacked or wound) comprise respective cutting and conveying apparatuses, one for each electrode (i.e. one for the cathode and one for the anode), including a gripping assembly and a cutting assembly.

In each one of these apparatuses, the strip of electrode is conveyed along a portion of the relative feeding path up to the gripping assembly which is linearly movable in reciprocating manner (parallel to the strip of electrode) and comprises two grippers arranged on opposite sides of the strip of electrode which close retaining the strip, once the linear speed of the strip of electrode has been reached by means of the reciprocating motion.

Once the grippers have gripped the strip of electrode, the cutting assembly, comprising a blade member and it too movable with reciprocating motion integrally with the gripping assembly, cuts the strip of electrode upstream of the gripping assembly, relative to the advancement direction of the strip.

In other words, the entire cutting and conveying apparatus, which carries the gripping assembly and the cutting assembly, is linearly and cyclically movable with reciprocating motion between a retracted position, spaced from the rolling unit, and an advanced position, close to the rolling unit for feeding to the latter the cut electrode. Between these two positions, the apparatus reaches the linear advancement speed of the strip of electrode so as to grip it and cut it without causing undesired tensioning or stretching therein.

The cutting and conveying apparatus thus defines a slide carrying the gripping assembly and the cutting assembly and cyclically movable with reciprocating linear motion between the aforementioned positions.

Once the cutting of the strip of electrode has been completed, the cutting and conveying apparatus completes its linear advancement motion towards the advanced position and the rolling unit, slowing down and feeding (or "delivering") to the input rollers of the latter the electrode that has just been cut and separated from the strip of electrode.

In the automatic machines of the known type, the linear movement of the gripping assembly and of the cutting assembly (and thus of the cutting and conveying apparatus) is carried out by means of an electric linear motor (in particular of brushless type).

Such linear motor is subject to extreme accelerations in the case of high production speeds.

In other words, the linear motor, burdened by its own weight, by the weight of the gripping assembly and by that of the cutting assembly, accelerates up to reaching the linear speed of the strip to be cut and, after the cut, decelerates while the flap of cut strip is kept gripped. Such flap remains partially hanging from the gripping assembly and is fed to the aforementioned input rollers. The entire apparatus thus needs a certain deceleration and braking space, since the first support for the flap (i.e. the pair of input rollers), successive to the gripping assembly, is necessarily distant from the cutting point because the gripping assembly (and, in particular, the entire apparatus) has to be allowed decelerating.

In order to partially overcome these problems, it has become necessary to increase the dimensions of the linear motor, increasing though the mass thereof. Consequently, for high speed productions (i.e. at least at hundreds of mm per second) of planar batteries, also having reduced dimensions, the linear motor has disproportionally imposing dimensions with respect to the rest of the automatic machine, since it needs the space and the torque necessary for accelerating all the cutting and conveying apparatus up to the linear speed of the strip of electrode and subsequently decelerating, after the cut, until stopping, and then moving back to the retracted position and restarting the cycle.

All this thus leads to increasing the bulks and the costs of the automatic machine and further determines productivity limits (in terms of cuts per minute) due to the necessary acceleration/deceleration spaces.

### Subject and Summary of the Invention

The object of the present invention is to provide a cutting and conveying apparatus for cutting and conveying a strip of material and a relative method for the production of electrical energy storage devices, which are highly reliable and have a limited cost, and allow overcoming at least some of the above-specified drawbacks and connected to the cutting and conveying apparatuses of known type.

According to the invention, this object is achieved by a cutting and conveying apparatus for cutting and conveying a strip of material and by a relative method for the production of electrical energy storage devices according to what claimed in the following independent claims and, preferably, in any one of the claims directly or indirectly dependent on the independent claims.

The claims describe preferred embodiments of the present invention forming integral part of the present description.

### Brief Description of the Drawings

In order to better understand the present invention, a preferred non-limiting embodiment is described in the following, by way of mere example and with the aid of the accompanying drawings, wherein:
- Figure 1 is a schematic side view, with parts removed for clarity, of part of an automatic machine for the production of electrical energy storage devices comprising two cutting and conveying apparatuses manufactured according to the present invention;
- Figures 2 to 4 are schematic side views, on an enlarged scale and with parts removed for clarity, of the apparatuses of Figure 1 during three different and successive operating conditions;
- Figure 5 is a top schematic view, on an enlarged scale and with parts removed for clarity, of a detail of one of the apparatuses of Figure 1;
- Figure 6 is a perspective view, on an enlarged scale and with parts removed for clarity, of part of one of the apparatuses of Figure 1;
- Figures 7 and 8 illustrate in a perspective view, on an enlarged scale and with parts removed for clarity, a component of one of the apparatuses of Figure 1 from two distinct points of view; and
- Figure 9 illustrates in a perspective view, on an enlarged scale and with parts removed for clarity, a component of a cutting and conveying apparatus manufactured in accordance with an alternative embodiment of the present invention.

### Detailed Description of Preferred Embodiments of the Invention

With reference to the accompanying figures, reference numeral 1 indicates, as a whole, an (part of an) automatic machine for the production of electrical energy storage devices (not illustrated), in particular rechargeable batteries, starting from a plurality of strips 3 of material for the production of the storage devices.

In particular, the following description will explicitly refer, without thereby losing generality, to enveloped planar rechargeable batteries, also known as batteries of the pouch type, which are obtained by laminating together strips of electrode (in particular a strip of anode and a strip of cathode) and strips of separator interposed between the strips of electrode in a staggered manner, according to a known scheme not specifically described. Conveniently, during the lamination, the strips are covered by further protection layers (these too strip-shaped), usually made of plastic film, which are removed and rewound following the lamination.

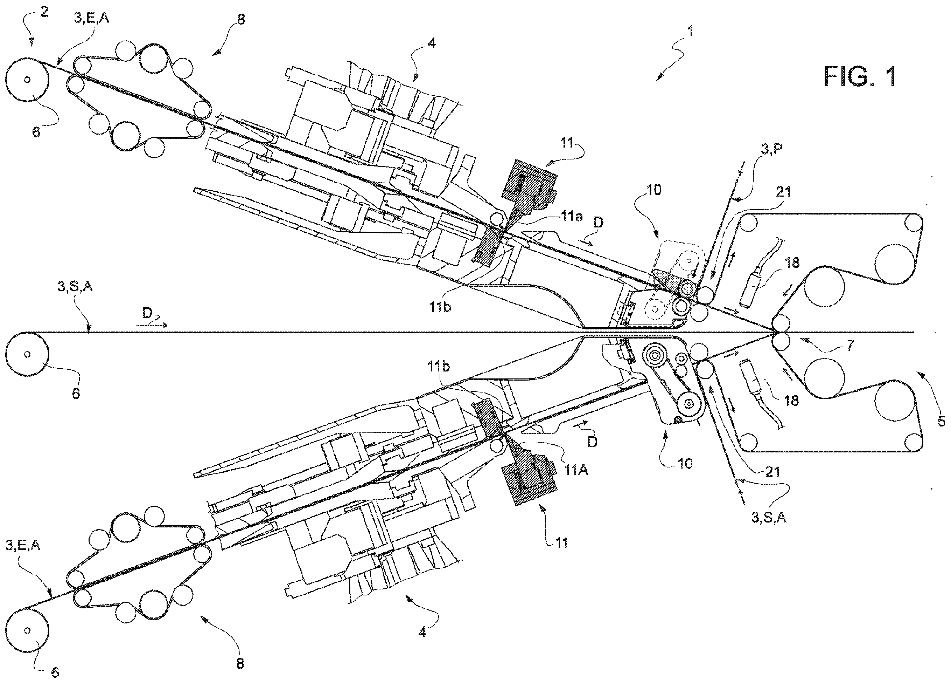

As is schematically shown in Figure 1, the machine 1 comprises:
- a feeding unit 2 for feeding at least one strip 3 of material for the production of the storage devices along a respective feeding path A and in an advancement direction D;
- at least one cutting and conveying apparatus 4 for cutting and conveying the at least one strip 3 arranged downstream of the feeding unit 2 relative to the advancement direction D; and
- a rolling unit 5 arranged downstream of the cutting and conveying apparatus 4, relative to the advancement direction D, and configured to receive the strip 3 and laminate it with at least another strip 3 of material for the production of the storage devices.

In particular, the feeding unit 2 is configured to feed a plurality of strips 3 initially wound in reels 6 along respective feeding paths A and respective advancement directions D.

It is specified that the advancement direction D indicates, in the present description, a direction parallel to the relative feeding path A in every point thereof and substantially extending from the feeding unit 2 to the rolling unit 5.

According to the preferred embodiment described and illustrated herein, the feeding unit 2 is configured to feed:
- two strips 3 of electrode E (for example a strip of cathode and a strip of anode) along respective feeding paths A; and
- two strips 3 of separator S along respective feeding paths A.

In particular, as is shown in Figure 1:
- the feeding path A of each strip 3 of electrode E extends from the relative reel 6 to the rolling unit 5, passing through a respective cutting and conveying apparatus 4; and
- the feeding path A of each strip of separator S extends from the respective reel 6 to the rolling unit 5 without passing through any cutting and conveying apparatus 4.

Conveniently, the machine 1 comprises unwinding rollers (not illustrated) configured to support the strips 3 of separator S along the respective feeding paths A.

Preferably, the feeding unit 2 is also configured to feed a strip 3 of protection layer P along a respective feeding path and up to the rolling unit 5, for using the same as protection of the strips 3 of electrode E and separator S during the lamination of the latter. In other words, the strip 3 of protection layer P acts as intermediate layer between lamination rollers (known and not illustrated) of the rolling unit 5 and the strips 3 of electrode E and separator S.

In the non-limiting example described herein, the rolling unit 5 comprises a pair of opposing input rollers 7 configured to receive all of the previously mentioned strips 3.

In particular, the feeding paths A of the strips 3 of electrode E, of separator S and of the protection layer P converge at the input rollers 7, through which the strips 3 enter the unit 5 for being laminated together (by means of the aforementioned lamination rollers), according to a known procedure not specifically described, thus obtaining a multilayer planar strip, comprising, in particular composed of, two continuous strips 3 of separator S between which the cut strips 3 of electrode E (i.e. the electrode plates) are interposed so that a strip 3 of anode faces (with a strip 3 of separator S in the middle) a strip 3 of cathode.

Downstream of the rolling unit 5, the multilayer planar strip is cut transversely (in particular between one electrode plate and the other) for obtaining a sequence of cells for enveloped planar batteries separated from one another. Specifically, the cells obtained following the cut successive to the lamination are monocells, which comprise two layers of electrode E and two layers of separator S alternated with respect to one another and laminated.

For the sake of brevity, reference will be made in the following to one single cutting and conveying apparatus 4 for cutting and conveying a strip 3 of electrode E of the machine 1. However, the structural and functional characteristics of such apparatus 4 are equally applicable to the other apparatus 4 and to every cutting and conveying apparatus possibly present in the machine 1.

The cutting and conveying apparatus 4 is configured to prepare the strip 3 of electrode E prior to the feeding thereof to the rolling unit 5.

According to an alternative embodiment not illustrated, the strip 3 treated and prepared by the apparatus 4 is defined by one or more strips 3 of separator S or by a strip of electrode/separator (multilayer) composite material.

The apparatus 4 comprises:
- a conveying unit 8, preferably a belt conveyor (having a fixed or variable geometry) arranged on opposite sides of the feeding path A, between which the strip 3 transits, and configured to convey the strip 3 along the feeding path A in the advancement direction D;
- a gripping assembly 10 arranged downstream of the conveyor 8, linearly movable with reciprocating (intermittent/cyclic) motion parallel to the feeding path A and configured to sequentially grip the strip 3 at successive portions thereof; and
- a cutting member 11 integral in motion with the gripping assembly 10, i.e. it too linearly movable with reciprocating motion integrally with the gripping assembly 10, and configured to sequentially cut the strip 3 when the latter is gripped by the gripping assembly 10 for determining the sequential separation (i.e. the singularization) of said successive portions from the strip 3.

Specifically, the cutting member 11 comprises a blade 11a and a counter-blade 11b arranged on opposite sides of the feeding path A and adapted to cooperate together for cutting the strip 3 transversely, in particular transversal to the advancement direction D or to a longitudinal extension of the strip 3, in order to separate each portion of strip previously gripped by the gripping assembly 10.

Obviously, it is understood that the positions of the blade and counter-blade can be exchanged between one another with respect to what illustrated in Figures 1 to 4, without thereby departing from the scope of protection of the present application.

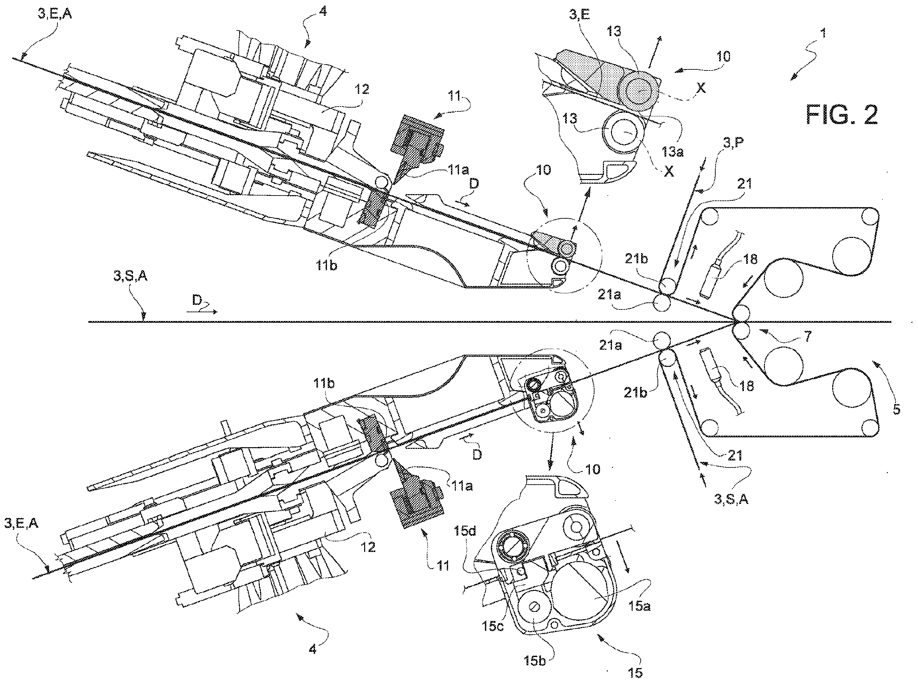

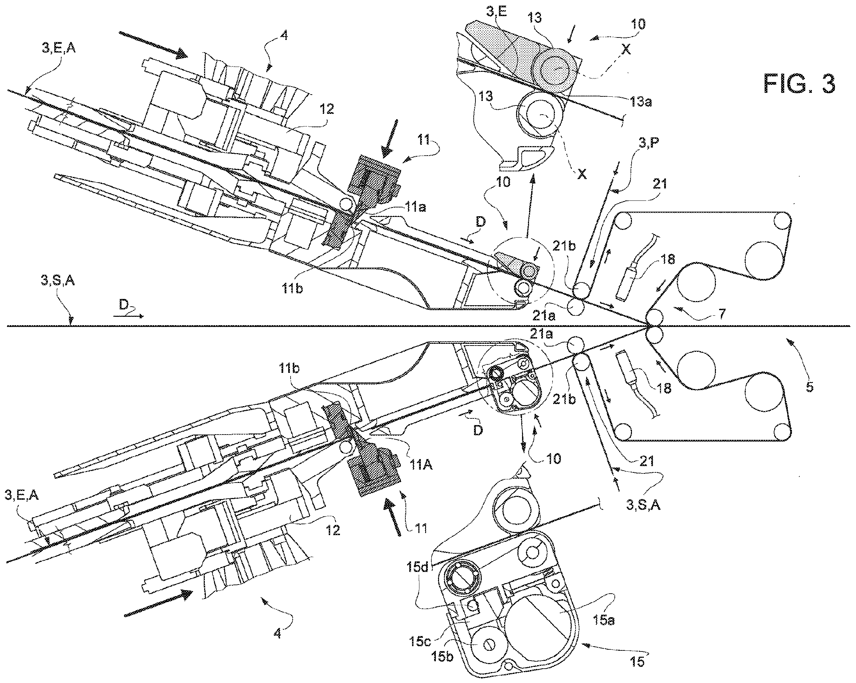

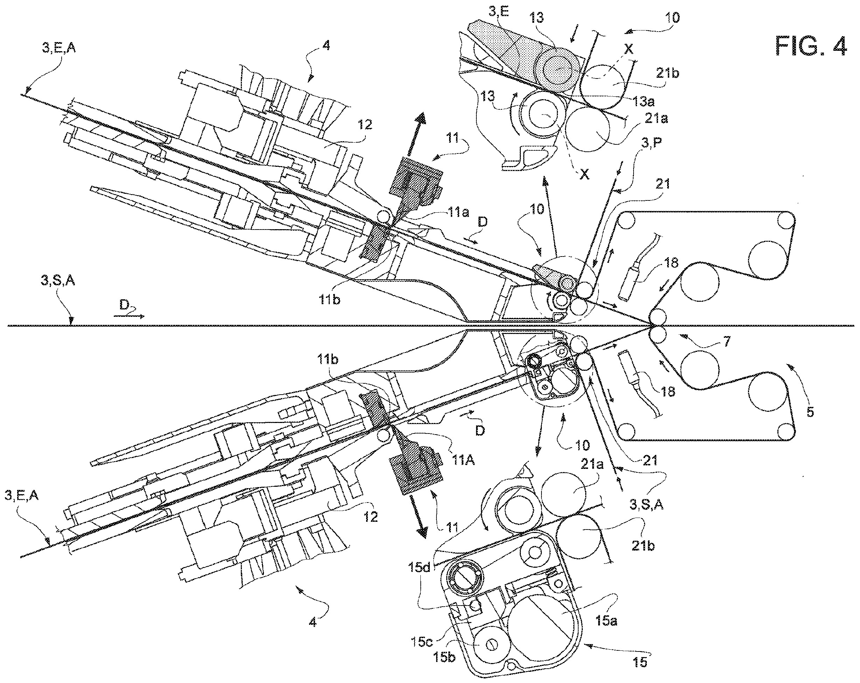

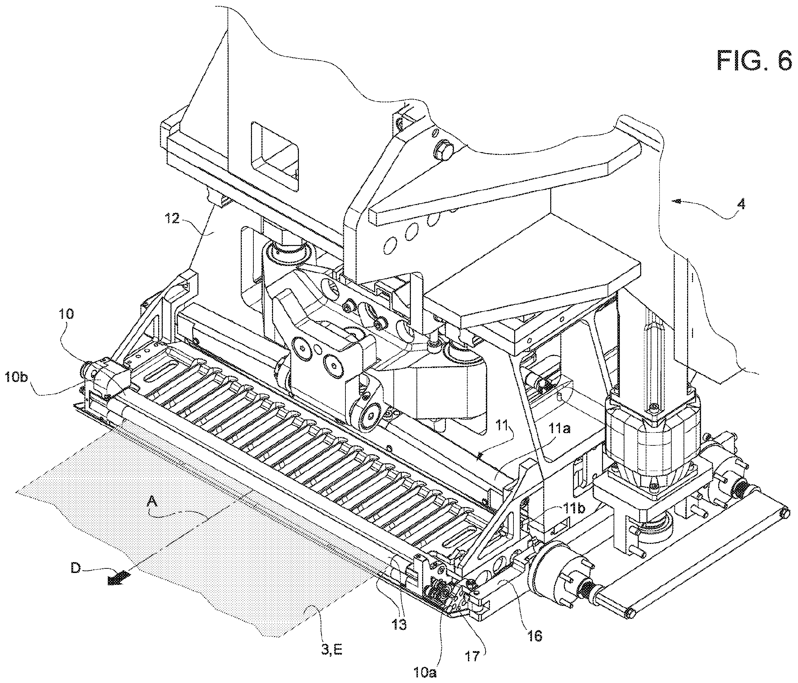

Preferably, the apparatus 4 comprises a slide 12 (partially and schematically visible in Figures 1 to 6) carrying the gripping assembly 10 and the cutting member 11 and linearly movable with reciprocating motion between a retracted position (Figure 2) and an advanced position (Figures 3 and 4).

Specifically, when the slide 12 is arranged in the retracted position the gripping assembly 10 is arranged at a first distance from the rolling unit 5, in particular from the input rollers 7; when the slide 12 is arranged in the advanced position, the gripping assembly 10 is arranged at a second distance from the rolling unit 5, in particular from the input rollers 7, which is less than the first distance.

In order to move the slide 12, and thus the gripping assembly 10 and the cutting member 11, with cyclic reciprocating motion between the retracted position and the advanced position, the machine 1 comprises an electric linear motor (known *per se* and not illustrated nor specifically described).

In practice, the linear motor controls, according to a known mode, the quick reciprocating movement of the slide 12 between the retracted position and the advanced position.

As is known, such reciprocating linear movement of the gripping assembly 10 and of the cutting member 11 is necessary in order to grip and cut the strip 3 at the linear advancement speed of the strip 3 along the feeding path A, so as to prevent undesired tensioning or stretching, which generally cause breakages of the material and the need for a machine stop.

In other words, the linear motor controls the movement of the slide 12 so that the gripping assembly 10 and the cutting member 11 reach, for at least part of the movement of the slide between the retracted position and the advanced position, the linear advancement speed of the strip 3. In particular, the cutting member 11 is configured to complete the cut (opening blade 11a and counter-blade 11b) before the slide 12 starts decelerating, i.e. while the slide 12 moves at the linear advancement speed of the strip 3.

According to an aspect of the present invention, the gripping assembly 10 comprises at least one pair of opposing rollers 13 each having a longitudinal axis X, arranged on opposite sides of the feeding path A, in particular with the respective longitudinal axes X transverse to the latter, and controllable between an open position (Figure 2), in which at least one of the rollers 13 is spaced from the strip 3, and a closed position (Figures 3 and 4), in which the rollers 13 are pressed together for determining the gripping of the strip 3 between their external longitudinal surfaces (i.e. their external cylindrical surfaces).

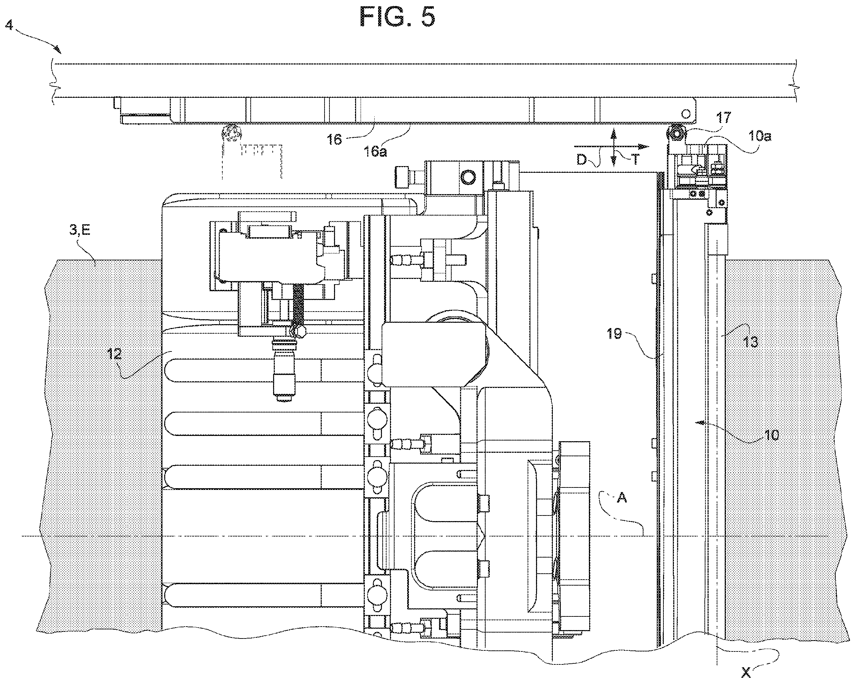

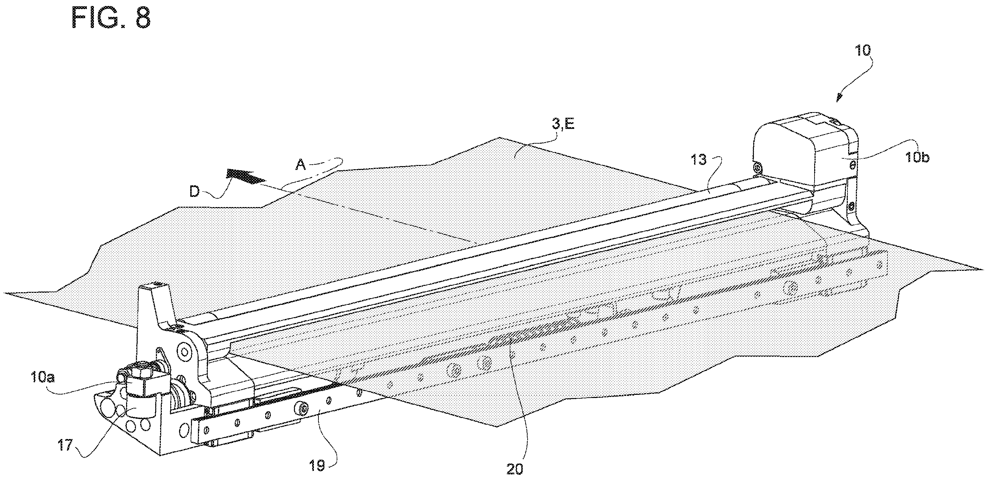

Specifically, the rollers 13 are mounted to the gripping assembly 10 with the respective axes X parallel to one another and perpendicular to the advancement direction D and to the feeding path, so as to transversely grip the strip 3 which slides between them, as shown in Figures 5 to 9.

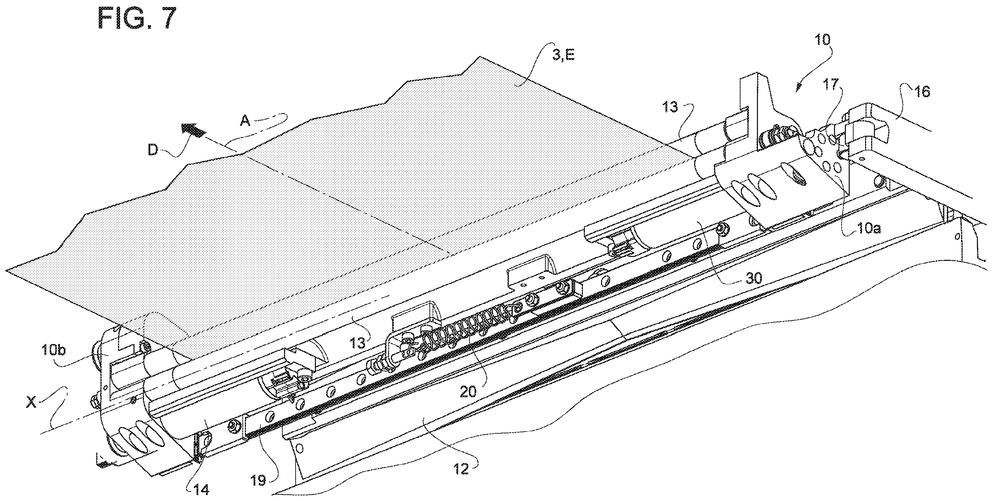

In order to control the rollers 13 between the open position and the closed position, each gripping assembly 10 comprises a first actuator 14 (visible in Figure 7) configured to drive the movement of (at least) one of the rollers 13 of the pair towards and away from the other one of the rollers 13 of the pair for determining, respectively, the open and closed positions of the pair.

In this non-limiting embodiment, the first actuator 14 is defined by an electric motor, in particular brushless. In other non-limiting embodiments, the first actuator 14 is an electric motor of a different type or arranged differently, for example at or internally one of the rollers 13.

More precisely, the first actuator 14 is operatively connected to said one of the rollers 13 by means of a cam kinematic mechanism 15.

In particular, as shown in Figures 2, 3 and 4, the kinematic mechanism 15 includes a cam 15a, a cam follower 15b and a lever 15c integrally coupled to the cam follower 15b.

In use, the first actuator 14 transmits the motion to the cam 15a, preferably by means of a belt (illustrated in Figure 1), causing the rotation thereof about its axis. At a certain rotation angle, the cam 15a cooperates in contact with the cam follower 15b, causing a movement thereof (to the left in Figures 3 and 4); such movement causes an integral movement of the lever 15c, which abuts against a fixed pin 15d, thus causing the hinged rotation of the aforementioned one of the rollers 13 and the consequent moving close of the latter to the other one of the rollers 13. The pair of rollers 13 is thus moved from the open position (Figure 2) to the closed position for gripping the strip 3 (Figures 3 and 4).

According to an important aspect of the present invention, at least one first roller 13 of said pair of rollers 13 is actuatable in rotation about its longitudinal axis X to drive an advancement of each portion of strip 3 (i.e. of each electrode plate), previously separated from the strip 3 (by means of the cutting member 11), along the feeding path A.

In particular, the first roller 13 is cyclically actuatable in rotation about its longitudinal axis X for advancing each portion of strip 3, previously separated from the strip 3 by means of the blade member 11, advancing it along the feeding path A following the advancement direction D and feeding it to the rolling unit 5, more precisely to the input rollers 7 of the latter.

In other words, in use and for each cutting cycle of the single electrode (cathode or anode) from the strip 3 of electrode E:
- the linear motor controls a movement of the slide 12 from the retracted position to the advanced position, in order to make the gripping assembly 10 (i.e. the rollers 13) and the cutting member 11 reach (during the movement) the advancement speed of the strip 3;
- contextually, the first actuator 14 activates the kinematic mechanism 15 which moves the pair of rollers 13 from the open position to the closed position for gripping a portion of strip 3 at the advancement speed of the strip 3;
- then, the cutting member 11 cuts the strip 3 transversely, at the advancement speed of the latter;
- at this point, while the linear motor already controls a deceleration of the slide 12, the first roller 13, which in the present non-limiting embodiment is defined by the roller 13 proximal to the (intermediate) strip 3 of separator S to be laminated between the two strips 3 of electrode E, is actuated in rotation about its axis X for advancing the cut portion of strip 3 along the feeding path A, and in particular towards the feeding unit 5.

In other non-limiting embodiments, the roller 13 actuatable in rotation is the roller 13 distal from the intermediate strip 3 of separator S. In further non-limiting embodiments, both rollers 13 of the pair are actuatable in rotation with respective opposing synchronous motions.

In particular, the first roller 13 or both rollers 13 are configured to compensate the deceleration of the slide 12 keeping the speed of the portion of strip 3 that has just been cut substantially constant along the feeding path A towards the input rollers 7.

Preferably, the first roller 13 is actuatable in rotation when the slide 12, i.e. when the gripping assembly 10, is positioned between the retracted position and the advanced position.

In an alternative embodiment, the first roller 13 is actuatable in rotation when the slide 12, i.e. when the gripping assembly 10, is in the advanced position.

Thanks to the aforementioned configurations, it is possible to limit the amplitude of the reciprocating motion of the slide 12, since it is possible to increase the aforementioned second distance of the slide 12, and thus of the gripping assembly 10, from the input rollers 7 of the rolling unit 5.

In particular, since the portion of strip 3 previously separated is cyclically fed to such rollers 7 by means of the actuation in rotation of the first roller 13, the gripping assembly 10 can be "stopped", in the advanced position, at a greater distance from the rollers 7 with respect to the case where the gripping assembly 10 does not comprise any roller actuatable in rotation and, therefore, has to feed the portion of strip 3 exclusively by means of the movement of the slide 12 from the retracted position to the advanced position. Furthermore, in accordance with the aforementioned preferred configuration, the dynamic of the reciprocating motion of the slide 12 is extremely smoother, since thanks to the aforementioned compensation put into effect by the roller 13 actuated in rotation, it is possible to make the same decelerate even prior to passing the portion of strip 3 to the input rollers 7, thus ensuring a less nervous motion and allowing re-dimensioning (in reduction) the linear motor.

Advantageously, as shown in Figure 7, the gripping assembly 10 comprises a second actuator 30 configured to control the aforementioned rotation of the first roller 13 about the axis X of the latter.

In the light of the foregoing, each gripping assembly 10 comprises an actuator 30 configured to control the rotation of the first roller 13 of the pair about its axis X, and an actuator 14 configured to control the movement of the second roller 13 of the pair towards and away from the first roller 13 for determining, respectively, the aforementioned open and closed positions of the pair of rollers 13.

In this non-limiting embodiment, the second actuator 30 is defined by an electric motor, in particular brushless. In other non-limiting embodiments, the second actuator 30 is an electric motor of different type or arranged differently, for example at or internally the first roller 13.

More precisely, the second actuator 30 is operatively connected to the first roller 13 by means of a kinematic mechanism (not illustrated), for example a gear.

According to a further aspect of the present invention, the gripping assembly 10 is movable along a transverse direction T transversal with respect to the advancement direction D of the strip 3.

To such regard, as is specifically visible in Figure 5, the machine 1 comprises a cam element, in particular a linear cam 16 extending along the advancement direction D, more in particular parallel to the feeding path A, and the gripping assembly 10 comprises a cam follower, preferably a cam follower roller 17, adapted to cooperate with the cam 16 for controlling the transverse movement of the gripping assembly 10 along the transverse direction T.

Specifically, the cam 16 is arranged laterally to the slide 12, and in particular to the gripping assembly 10, relative to the advancement direction D, whereas the cam follower roller 17 is integrally fixed to a first lateral portion 10a of the gripping assembly 10 opposite a second lateral portion 10b at which the kinematic mechanism 15 is positioned.

More specifically, with reference to the longitudinal axes X, the cam follower roller 17 is arranged at a first axial end portion of the gripping assembly 10, whereas the kinematic mechanism 15 is arranged at a second axial end portion, opposite the first one, of the gripping assembly 10.

According to this preferred and non-limiting embodiment, the cam 16 is movable along the transverse direction T for controlling the transverse movement of the gripping assembly 10 through the interaction with the cam follower roller 17.

To such regard, the machine 1 comprises a control unit (not illustrated) and at least one sensor 18 (Figure 1) arranged downstream of the cutting member 11, relative to the advancement direction D, and configured to sequentially detect reference elements on the strip 3 each arranged at a respective portion of strip 3, for generating signals correlated to each detection and sending such signals to the control unit.

Advantageously, the control unit is configured to control a movement of the cam 16 along the transverse direction T on the basis of said signals.

Preferably, the sensor 18 is defined by an optic sensor, for example a camera operating in the visible spectrum or in the infrared spectrum or in the ultraviolet spectrum, or by a magnetic-inductive sensor adapted to detect a magnetically active band arranged on each portion of strip 3.

Properly, the machine 1 comprises a sensor 18 for each cutting and conveying apparatus 4.

In an embodiment, the sensor 18 is part of the cutting and conveying apparatus 4.

In the light of the foregoing, the machine 1 is configured to carry out an adjustment of the positioning of the gripping assembly 10 along the transverse direction T, so as to adjust the positioning of the strip 3, or better of each portion of strip 3 previously separated from the strip 3, being fed to the rolling unit 5.

More precisely, the control unit is configured to detect, by means of the sensor 18, the positioning of the reference elements of the cut portions of strip 3 and calculate an error based on the positioning difference with respect to a nominal positioning. The control unit is also configured to correct such error by controlling the transverse movement of the cam 16 and thus the transverse movement of the gripping assembly 10. In particular, the sensor 18 is configured to detect the distance between a fixed reference element and a movable reference element of the strip 3 of electrode E. More in particular, the sensor 18 is configured to detect the position of a terminal tab of the strip 3 of electrode E or the position of a lateral edge of a coating (of known type and not illustrated) of the electrode E.

To such end, the cam follower roller 17 is configured to slide in contact on a surface 16a of the cam 16, following the reciprocating motion of the slide 12. In turn, the cam 16 is moved by the control unit (for example by means of a further actuator not illustrated) along the transverse direction T on the basis of the detection of the sensor 18, so as to control the movement of the gripping assembly 10.

Advantageously, the gripping assembly 10 is fixed to the slide 12 in a sliding manner by means of a linear guide 19 parallel to the transverse direction T.

Properly, the apparatus 4 includes elastic means, for example a helical spring 20 interposed between the linear guide 19 and the gripping assembly 10 for controlling, in particular for pushing, the latter towards a given position along the transverse direction T.

In practice, the spring 20 exerts a return force on the gripping assembly 10 pushing it along the transverse direction T towards the cam 16, so that the cam follower roller 17 is pressed (pushed) against the surface 16a of the cam 16.

In such manner, a constant abutment of the cam follower roller 17 against the cam 16 is ensured during the production process and, therefore, the precision of the transverse control of the gripping assembly 10 is ensured.

According to the non-limiting example described herein, the rollers 13 of the gripping assembly 10 are made of carbon fiber. This configuration is particularly, but not exclusively, advantageous in the case of the production of large-sized batteries, since such material allows manufacturing rollers 13 having a particularly extended axial dimension simultaneously preventing a high elastic arrow of the same during the production.

Advantageously, the machine 1 comprises at least one further pair of opposing rollers 21, in particular a further pair of rollers 21 for each cutting and conveying apparatus 4, arranged downstream of the apparatus 4 and upstream of the rolling unit 5, relative to the advancement direction D, and configured to support each portion of strip 3 previously separated from the strip 3 between the gripping assembly 10 and the rolling unit 5.

Specifically, the rollers 21 are operatively interposed between the gripping assembly 10, i.e. between the rollers 13, and the input rollers 7, relative to the advancement direction D, and are configured to sequentially receive between them the portions of strip 3 previously cut.

In practice, the further pair of rollers 21 allows providing support to each portion of strip 3 up to the proximity to the input rollers 7 so as to favor the insertion of such portion of strip 3 in the rolling unit 5 providing a suitable support.

In such manner, the stroke of the slide 12 can be further reduced, since each portion of strip 3 previously separated from the strip 3 is conveyed to the rolling unit 5 with a suitable support.

More precisely, the aforementioned second distance between the gripping assembly 10 in the advanced position and the input rollers 7 can be further increased without compromising the nominal feeding of each portion of strip 3.

Preferably, the rollers 21 of each pair are passive. Specifically, a first roller 21a is dragged into rotation by the portion of strip 3 that transits between the pair of rollers 21 and a second roller 21b is dragged by a further strip 3 of material for the production of the storage devices.

For example, as is shown in Figures 1 to 4, the second roller 21b is dragged by the strip 3 of separator S or by the strip 3 of protection layer P.

In such manner, no motorization of the rollers 21 of the further pair is necessary and, consequently, it is possible to reduce the total number of the components of the machine 1, further increasing the reliability thereof.

In particular, the distance between the rollers 21 and the rollers 7 corresponds to the minimum size processable by the machine 1, since the continuous gripping of the strips 3 by at least one pair of rollers is to be ensured.

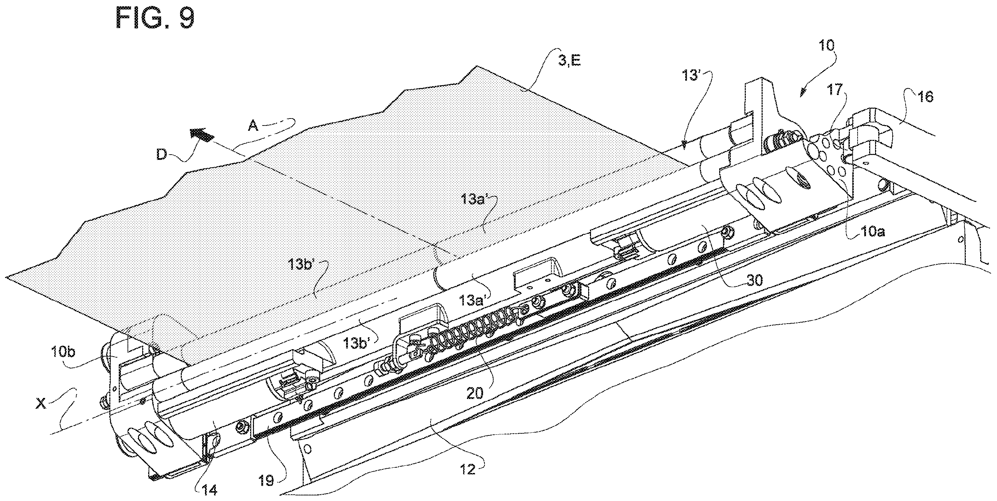

Figure 9 illustrates an alternative embodiment of the gripping assembly 10 of the cutting and conveying apparatus 4 according to the present invention.

Since such alternative embodiment is structurally and functionally similar to the gripping assembly 10 already described, only the distinctive characteristics with respect to the latter will be described in the following, using where possible the same references.

In particular, the gripping assembly 10 according to the alternative embodiment comprises a pair of rollers 13' each of which is defined by two half-rollers 13a', 13b' arranged adjacent to one another (i.e. consecutively) along the respective longitudinal axis X.

Such configuration is particularly, but not exclusively, advantageous in the case of the production of large-sized batteries, since a reduction of the elastic arrow of each roller 13' results therefrom during the production.

In particular, the half-rollers 13a', 13b' are connected to one another by means of a hinge which decouples the rotary motion thereof. In particular, the hinge is supported by a support element not illustrated, which allows improving the sturdiness of the gripping assembly.

Advantageously, the half-rollers 13a', 13b' of each roller 13' are actuatable in rotation about the respective longitudinal axis X independently of one another for controlling a yaw of each portion of strip 3, previously separated from the strip 3, with respect to the advancement direction D.

In other words, the half-rollers 13a', 13b' are rotated at different speeds for determining a rotation (or an angulation) of the portion of strip 3 on an ideal plane containing the portion of strip 3 downstream of the cut and upstream of the rolling unit 5, i.e. prior to the feeding of such portion of strip 3 to the input rollers 7.

To such regard, the control unit is also configured to control a rotation of the half-rollers 13a', 13b' on the basis of the signals generated by the aforementioned sensor 18.

In such manner, similar to what occurs for the control of the movement of the gripping assembly 10 along the transverse direction T, the control unit detects, by means of the sensor 18, the positioning of the reference elements of the separated portions of strip 3 and calculates an error based on the angulation difference with respect to a nominal angulation of the portions of strip 3. The control unit is also configured to correct such error controlling the rotation of the half-rollers 13a', 13b' independently of one another.

Conveniently, each half-roller 13a', 13b' is controlled by a dedicated actuator.

In an embodiment, the first actuator 14 controls one 13b' of the half-rollers 13a', 13b' and the second actuator 30 controls the other one 13a' of the half-rollers 13a', 13b', for each roller 13'.

The apparatus 4 and the machine 1 described above allow implementing a method for the production of electrical energy storage devices, in particular of enveloped planar batteries, said method comprises the steps of:
a) feeding the strip 3 of material, in particular of electrode E, along the respective feeding path A and in the advancement direction D;
b) sequentially gripping the strip 3 at successive portions thereof;
c) sequentially cutting the strip 3, during the gripping step b), for determining the sequential separation of the successive portions from the strip 3; and
d) advancing each portion of strip 3 previously separated towards the rolling unit 5.

According to the invention, the gripping step b) is carried out by pressing the two opposing rollers 13 of the gripping assembly 10 together, and the advancing step d) is carried out by rotating the first roller 13 about its axis X.

Advantageously, the aforementioned method further comprises the step of:
e) displacing, after the cutting step c) and prior to the advancing step d), the two rollers 13 along the transverse direction T for adjusting a positioning of each portion of strip 3 previously separated from the strip 3 transversely to the advancement direction D.

In the case of the embodiment shown in Figure 9, i.e. in the case where each roller 13' is defined by two half-rollers 13a', 13b', the method further comprises the step of:
f) rotating the two half-rollers 13a', 13b' about the respective longitudinal axis X independently of one another, for adjusting a yaw of each portion of strip 3, previously separated from the strip 3, with respect to the advancement direction D.

By examining the characteristics of the cutting and conveying apparatus 4 and of the relative production method provided according to the present invention the advantages that they allow obtaining are evident.

In particular, since the previously cut and separated portion of strip 3 is cyclically fed to the rollers 7 by means of the actuation in rotation of the first roller 13, the gripping assembly 10 can be "stopped" in the advanced position, at a greater distance from the rollers 7 with respect to the case where the gripping assembly 10 does not comprise any roller actuatable in rotation and, therefore, has to feed the portion of strip 3 exclusively by means of the movement of the slide 12 from the retracted position to the advanced position.

At the same time, the productivity of the machine 1 is increased, said machine 1 being now capable of producing a wide range of sizes keeping the speed of the strips 3 high (according to the prior art, the small sizes, for example for batteries for consumer electronics, can be produced at reduced speeds with respect to the very large sizes, for example for the automotive sector).

In other words, the braking distance to be ensured between the gripping assembly 10 in the advanced position and the rolling unit 5 is reduced, since the gripping assembly 10 is capable of feeding each portion of strip 3 to the rollers 7 from a greater distance, thanks to the first roller 13 actuatable in rotation.

This allows reducing the dimensions of the linear motor controlling the slide 12 and controlling a slowing down of the slide 12 earlier, with respect to the known case. Considering the high speed at which the machine 1 operates, the foregoing results in a drastic reduction in costs and in bulks.

Furthermore, the flexibility of the machine 1 is improved, since the need to replace the linear motor following a change of size of the rechargeable batteries is at least limited, given that it is possible to control, by means of the second actuator 30, the entity of the rotation of the first roller 13 actuatable in rotation.

Additionally, the possibility of controlling a transverse adjustment of each portion of strip 3 previously separated, by means of the cam 16 - cam follower 17 - sensor 18 - control unit system, increases the precision and the quality of the production of the batteries.

Furthermore, the possibility of controlling a yaw of the portion of strip 3 previously separated, by means of the half-rollers 13a', 13b' - sensor 18 - control unit system, further increases the precision and the quality of the production of the batteries.

A further advantage of the present invention lies in an enormous decrease in the interruption of the production of the automatic machine 1 due to jamming caused by the bending with respect to themselves (or anyway non-linearity) of the terminal tabs of the strip 3 of electrode E. In particular, transiting through the rollers 13, 13', such tabs undergo less stress with respect to the solutions with grippers of prior art and are also possibly straightened during the transit.

Finally, the presence of further pairs of rollers 21 allows further reducing the stroke of the slide 12, since each portion of strip 3 previously separated from the strip 3 is conveyed to the rolling unit 5 with a suitable support.

It is clear that modifications and variations can be made to the apparatus 4 and to the machine 1 described and illustrated herein and to the production method described herein without thereby departing from the scope of protection defined by the claims.

## Claims

1. A cutting and conveying apparatus (4) for cutting and conveying a strip (3) of material for the production of electrical energy storage devices, the apparatus (4) comprising:
- a conveying unit (8) for conveying the strip (3) along a feeding path (A) in an advancement direction (D);
- a gripping assembly (10) arranged downstream of the conveying unit (8), linearly movable with reciprocating motion parallel to the feeding path (A), and configured to sequentially grip the strip (3) at successive portions thereof; and
- a cutting member (11) integral in motion with the gripping assembly (10) and configured to sequentially cut the strip (3) when the latter is gripped by the gripping assembly (10) to determine the sequential separation of said successive portions from the strip (3);
wherein the gripping assembly (10) comprises at least one pair of opposing rollers (13; 13') each having a longitudinal axis (X), arranged on opposite sides of the feeding path (A) and controllable between an open position, in which at least one of the rollers (13; 13') is spaced from the strip (3), and a closed position, in which the rollers (13; 13') are pressed together to determine the grip of the strip (3) between their external longitudinal surfaces;
and wherein at least one roller (13; 13') of said pair of rollers (13; 13') is actuatable in rotation about its longitudinal axis (X) to drive an advancement of each portion of strip (3), previously separated from the strip (3), along the feeding path (A).

2. Apparatus as claimed in claim 1, wherein the gripping assembly (10) and the cutting member (11) are movable, by means of said reciprocating linear motion, between a retracted position and an advanced position;
and wherein said at least one roller (13; 13') is actuatable in rotation when the gripping assembly (10) is positioned between the retracted position and the advanced position or when the gripping assembly (10) is at said advanced position.

3. Apparatus as claimed in claim 1 or 2, wherein the gripping assembly (10) comprises a first actuator (14) configured to control the rotation of a first roller (13; 13') of said pair of rollers about its longitudinal axis (X), and a second actuator (30) configured to control the movement of a second roller (13; 13') of said pair of rollers towards and away from the first roller (13; 13') to determine, respectively, said open and closed positions of the pair of rollers.

4. Apparatus as claimed in any one of the preceding claims, wherein the gripping assembly (10) is movable along a transverse direction (T) transversal with respect to said advancement direction (D), the gripping assembly (10) comprising a cam follower (17) configured to cooperate with a cam element (16) to control the movement of the gripping assembly (10) along the transverse direction (T); in particular, the cutting member (11) is arranged upstream of the gripping assembly (10), relative to said advancement direction (D).

5. Apparatus as claimed in claim 4, and comprising a slide (12) carrying the gripping assembly (10) and the cutting member (11) and linearly movable with reciprocating motion between a retracted position and an advanced position;
wherein the gripping assembly (10) is fixed to the slide (12) in a sliding manner by means of a linear guide (19) parallel to said transverse direction (T);
and wherein the apparatus (4) includes elastic means (20) operatively interposed between the linear guide (19) and the gripping assembly (10) for controlling the latter towards a given position along said transverse direction (T).

6. Apparatus as claimed in any one of the preceding claims, in which each roller (13') of said pair of rollers is defined by two half-rollers (13a', 13b') arranged adjacent to one another along the respective longitudinal axis (X).

7. Apparatus as claimed in claim 6, wherein said half-rollers (13a', 13b') are actuatable in rotation about the respective longitudinal axis (X) independently of one another to control a yaw of each portion of strip (3), previously separated from the strip (3), with respect to said advancement direction (D).

8. Apparatus as claimed in claim 7, and comprising at least one sensor (18) arranged downstream of the cutting member (11), relative to said advancement direction (D), and configured to sequentially detect reference elements on the strip (3) each arranged at a respective portion of strip (3), to generate signals correlated to each detection, and to send such signals to a control unit adapted to control a rotation of said half-rollers (13a', 13b') on the basis of said signals.

9. Apparatus as claimed in any one of the preceding claims, in which each roller (13; 13') of said pair of rollers is made of carbon fiber.

10. An automatic machine (1) for the production of electrical energy storage devices comprising:
- a feeding unit (2) for feeding at least one strip (3) of material for the production of the storage devices along a respective feeding path (A) and in an advancement direction (D) ;
- at least one cutting and conveying apparatus (4) as claimed in any one of the preceding claims and arranged downstream of the feeding unit (2), relative to said advancement direction (D); and
- a rolling unit (5) arranged downstream of the cutting and conveying apparatus (4), relative to said advancement direction (D), and configured to receive the strip (3) of material and laminate it with at least another strip (3) of material for the production of the storage devices;
wherein said at least one roller (13; 13') is actuatable in rotation about its longitudinal axis (X) to advance said portion of strip (3) previously separated from the strip (3) and to feed it to the rolling unit (5).

11. Automatic machine as claimed in claim 10, and comprising a cam element (16) movable along a transverse direction (T) transversal to said advancement direction (D);
the gripping assembly (10) comprising a cam follower (17) configured to cooperate with the cam element (16) for controlling a movement of the gripping assembly (10) along said transverse direction (T);
said machine (1) comprising a control unit and at least one sensor (18) arranged downstream of the cutting member (11), relative to said advancement direction (D), and configured to sequentially detect reference elements on the strip (3) each arranged at a respective portion of strip (3), to generate signals correlated to each detection, and to send such signals to the control unit;
wherein the control unit is configured to control the movement of the cam element (16) along the transverse direction (T) on the basis of said signals.

12. Automatic machine as claimed in claim 10 or 11, and comprising at least one further pair of opposing rollers (21) arranged downstream of the cutting and conveying apparatus (4) and upstream of the rolling unit (5), relative to said advancement direction (D), and configured to support each portion of strip (3), previously separated from the strip (3), between the gripping assembly (10) and the rolling unit (5).

13. Method for the production of electrical energy storage devices comprising the steps of:
a) feeding a strip (3) of material for the production of the storage devices along a feeding path (A) and in an advancement direction (D);
b) sequentially gripping the strip (3) at successive portions thereof;
c) sequentially cutting the strip (3), during the gripping step b), to determine the sequential separation of said successive portions from the strip (3);
d) advancing each portion of strip (3) previously separated towards a rolling unit (5);
wherein the gripping step b) is carried out by pressing two opposing rollers (13; 13 ') together;
and wherein the advancing step d) is carried out by rotating at least one of the two rollers (13; 13') about its longitudinal axis (X).

14. Method as claimed in claim 13, and comprising the step of:
e) displacing, after the cutting step c) and prior to the advancing step d), the two rollers (13; 13') along a transverse direction (T) transversal to the advancement direction (D) for adjusting a positioning of each portion of strip (3), previously separated from the strip (3), transversely to the advancement direction (D).

15. Method as claimed in claim 13 or 14, wherein each one of the two rollers (13') has a longitudinal axis (X) and is defined by two half-rollers (13a', 13b') arranged adjacent to one another along the longitudinal axis (X); the method comprising the step of:
f) rotating the two half-rollers (13a', 13b') about the respective longitudinal axis (X) independently of one another for adjusting a yaw of each portion of strip (3), previously separated from the strip (3), with respect to said advancement direction (D).

## Patentansprüche

1. Schneid- und Fördereinrichtung (4) zum Schneiden und Fördern eines Streifens (3) aus Material zur Herstellung von Speichervorrichtungen für elektrische Energie, wobei die Einrichtung (4) Folgendes umfasst:
- eine Fördereinheit (8) zum Fördern des Streifens (3) entlang eines Zuführwegs (A) in einer Vorschubrichtung (D);
- eine Greifbaugruppe (10), die stromabwärts der Fördereinheit (8) angeordnet, linear mit einer Hin- und Herbewegung parallel zu dem Zuführweg (A) bewegbar und ausgelegt ist, um den Streifen (3) sequentiell an aufeinanderfolgenden Abschnitten davon zu greifen, und
- ein Schneidelement (11), das sich fest verbunden mit der Greifbaugruppe (10) bewegt und ausgelegt ist, um den Streifen (3) sequentiell zu schneiden, wenn dieser durch die Greifbaugruppe (10) gegriffen wird, um die sequentielle Trennung der aufeinanderfolgenden Abschnitte von dem Streifen (3) herbeizuführen,
wobei die Greifbaugruppe (10) mindestens ein Paar gegenüberliegender Rollen (13; 13') umfasst, die jeweils eine Längsachse (X) aufweisen, auf gegenüberliegenden Seiten des Zuführwegs (A) angeordnet sind und zwischen einer offenen Position, in der mindestens eine der Rollen (13; 13') von dem Streifen (3) beabstandet ist, und einer geschlossenen Position, in der die Rollen (13; 13') zusammengedrückt werden, um den Griff des Streifens (3) zwischen ihren äußeren Längsoberflächen herbeizuführen, steuerbar sind,
und wobei mindestens eine Rolle (13; 13') des Paars Rollen (13; 13') um ihre Längsachse (X) in Drehung versetzbar ist, um einen Vorschub jedes zuvor von dem Streifen (3) getrennten Abschnitts des Streifens (3) entlang des Zuführwegs (A) zu bewirken.

2. Einrichtung nach Anspruch 1, wobei die Greifbaugruppe (10) und das Schneidelement (11) mittels der linearen Hin- und Herbewegung zwischen einer zurückgezogenen Position und einer vorgeschobenen Position bewegbar sind,
und wobei die mindestens eine Rolle (13; 13') in Drehung versetzbar ist, wenn die Greifbaugruppe (10) zwischen der zurückgezogenen Position und der vorgeschobenen Position positioniert ist oder wenn sich die Greifbaugruppe (10) in der vorgeschobenen Position befindet.

3. Einrichtung nach Anspruch 1 oder 2, wobei die Greifbaugruppe (10) einen ersten Aktor (14), der ausgelegt ist, um die Drehung einer ersten Rolle (13; 13') des Rollenpaars um ihre Längsachse (X) zu steuern, und einen zweiten Aktor (30) umfasst, der ausgelegt ist, um die Bewegung einer zweiten Rolle (13; 13') des Rollenpaares hinführend zu und wegführend von der ersten Rolle (13; 13') zu steuern, um jeweils die offene und die geschlossene Position des Rollenpaars herbeizuführen.

4. Einrichtung nach einem der vorhergehenden Ansprüche, wobei die Greifbaugruppe (10) entlang einer Querrichtung (T) quer in Bezug auf die Vorschubrichtung (D) bewegbar ist, die Greifbaugruppe (10) einen Nockenfolger (17) umfasst, der ausgelegt ist, um mit einem Nockenelement (16) zusammenzuwirken, um die Bewegung der Greifbaugruppe (10) entlang der Querrichtung (T) zu steuern, wobei das Schneidelement (11) insbesondere stromaufwärts der Schneidbaugruppe (10) relativ zu der Vorschubrichtung (D) angeordnet ist.

5. Einrichtung nach Anspruch 4, umfassend einen Schlitten (12), der die Greifbaugruppe (10) und das Schneidelement (11) trägt und mit einer Hin- und Herbewegung linear zwischen einer zurückgezogenen Position und einer vorgeschobenen Position bewegbar ist,
wobei die Greifbaugruppe (10) mittels einer zu der Querrichtung (T) parallelen Linearführung (19) gleitend an dem Schlitten (12) befestigt ist,
und wobei die Einrichtung (4) elastische Mittel (20) umfasst, die betriebswirksam zwischen der Linearführung (19) und der Greifbaugruppe (10) angeordnet sind, um Letztere hinführend zu einer vorgegebenen Position entlang der Querrichtung (T) zu steuern.

6. Einrichtung nach einem der vorhergehenden Ansprüche, wobei jede Rolle (13') des Rollenpaars durch zwei Halbrollen (13a', 13b') definiert ist, die entlang der jeweiligen Längsachse (X) benachbart zueinander angeordnet sind.

7. Einrichtung nach Anspruch 6, wobei die Halbrollen (13a', 13b') unabhängig voneinander um die jeweilige Längsachse (X) in Drehung versetzbar sind, um einen Gierwinkel jedes zuvor von dem Streifen (3) getrennten Abschnitts des Streifens (3) in Bezug auf die Vorschubrichtung (D) zu steuern.

8. Einrichtung nach Anspruch 7, umfassend mindestens einen Sensor (18), der stromabwärts des Schneidelements (11) relativ zu der Vorschubrichtung (D) angeordnet und ausgelegt ist, um sequentiell Referenzelemente auf dem Streifen (3) zu erkennen, die jeweils an einem jeweiligen Abschnitt des Streifens (3) angeordnet sind, um Signale zu generieren, die mit jeder Erkennung verknüpft sind, und um diese Signale an eine Steuereinheit zu senden, die zum Steuern einer Drehung der Halbrollen (13a', 13b') basierend auf den Signalen angepasst ist.

9. Einrichtung nach einem der vorhergehenden Ansprüche, wobei jede Rolle (13; 13') des Rollenpaars aus Kohlefaser besteht.

10. Automatische Maschine (1) zur Herstellung von Speichervorrichtungen für elektrische Energie, umfassend:
- eine Zuführeinheit (2) zum Zuführen mindestens eines Streifens (3) aus Material zur Herstellung der Speichervorrichtungen entlang eines jeweiligen Zuführwegs (A) und in einer Vorschubrichtung (D);
- mindestens eine Schneid- und Fördereinrichtung (4) nach einem der vorhergehenden Ansprüche, die stromabwärts der Zuführeinheit (2) relativ zu der Vorschubrichtung (D) angeordnet ist, und
- eine Rolleneinheit (5), die stromabwärts der Schneid- und Fördereinrichtung (4) relativ zu der Vorschubrichtung (D) angeordnet und ausgelegt ist, um den Streifen (3) aus Material aufzunehmen und mit mindestens einem weiteren Streifen (3) aus Material zur Herstellung der Speichervorrichtungen zu laminieren,
wobei die mindestens eine Rolle (13; 13') um ihre Längsachse (X) in Drehung versetzbar ist, um den zuvor von dem Streifen (3) getrennten Abschnitt des Streifens (3) vorzuschieben und der Rolleneinheit (5) zuzuführen.

11. Automatische Maschine nach Anspruch 10, umfassend ein Nockenelement (16), das entlang einer Querrichtung (T) quer zu der Vorschubrichtung (D) bewegbar ist,
wobei die Greifbaugruppe (10) einen Nockenfolger (17) umfasst, der ausgelegt ist, um mit dem Nockenelement (16) zum Steuern einer Bewegung der Greifbaugruppe (10) entlang der Querrichtung (T) zusammenzuwirken,
wobei die Maschine (1) eine Steuereinheit und mindestens einen Sensor (18) umfasst, der stromabwärts des Schneidelements (11) relativ zu der Vorschubrichtung (D) angeordnet und ausgelegt ist, um sequentiell Referenzelemente auf dem Streifen (3) zu erkennen, die jeweils an einem jeweiligen Abschnitt des Streifens (3) angeordnet sind, um Signale zu generieren, die mit jeder Erkennung verknüpft sind, und um diese Signale an die Steuereinheit zu senden,
wobei die Steuereinheit ausgelegt ist, um die Bewegung des Nockenelements (16) entlang der Querrichtung (T) basierend auf den Signalen zu steuern.

12. Automatische Maschine nach Anspruch 10 oder 11, umfassend mindestens ein weiteres Paar gegenüberliegender Rollen (21), die stromabwärts der Schneid- und Fördereinrichtung (4) und stromaufwärts der Rolleneinheit (5) relativ zu der Vorschubrichtung (D) angeordnet und ausgelegt sind, um jeden zuvor von dem Streifen (3) getrennten Abschnitt des Streifens (3) zwischen der Greifbaugruppe (10) und der Rolleneinheit (5) zu stützen.

13. Verfahren zur Herstellung von Speichervorrichtungen für elektrische Energie, umfassend die folgenden Schritte:
a) Zuführen eines Streifens (3) aus Material zur Herstellung der Speichervorrichtungen entlang eines Zuführwegs (A) und in einer Vorschubrichtung (D);
b) sequentielles Greifen des Streifens (3) an aufeinanderfolgenden Abschnitten davon;
c) sequentielles Schneiden des Streifens (3) während des Greifschritts b), um die sequenzielle Trennung der aufeinanderfolgenden Abschnitte von dem Streifen (3) herbeizuführen;
d) Vorschieben jedes zuvor getrennten Abschnitts des Streifens (3) hinführend zu einer Rolleneinheit (5),
wobei der Greifschritt b) durch Zusammendrücken zweier gegenüberliegender Rollen (13; 13') durchgeführt wird,
und wobei der Vorschubschritt d) durch Drehen mindestens einer der beiden Rollen (13; 13') um ihre Längsachse (X) durchgeführt wird.

14. Verfahren nach Anspruch 13, umfassend den folgenden Schritt:
e) Verschieben der beiden Rollen (13; 13') nach dem Schneideschritt c) und vor dem Vorschubschritt d) entlang einer Querrichtung (T) quer zu der Vorschubrichtung (D) zum Einstellen einer Positionierung jedes zuvor von dem Streifen (3) getrennten Abschnitts des Streifens (3) quer zu der Vorschubrichtung (D).

15. Verfahren nach Anspruch 13 oder 14, wobei jede der beiden Rollen (13') eine Längsachse (X) aufweist und durch zwei Halbrollen (13a', 13b') definiert ist, die zueinander benachbart entlang der Längsachse (X) angeordnet sind, wobei das Verfahren den folgenden Schritt umfasst:
f) Drehen der Halbrollen (13a', 13b') unabhängig voneinander um die jeweilige Längsachse (X) zum Einstellen eines Gierwinkels jedes zuvor von dem Streifen (3) getrennten Abschnitts des Streifens (3) in Bezug auf die Vorschubrichtung (D).

## Revendications

1. Dispositif de coupe et de transport (4) destiné à découper et à transporter une bande (3) de matériau pour la fabrication de dispositifs de stockage d'énergie électrique, le dispositif (4) comprenant :
- une unité de transport (8) destinée à transporter la bande (3) le long d'un trajet d'alimentation (A) dans une direction d'avance (D) ;
- un ensemble de préhension (10) disposé en aval de l'unité de transport (8), mobile linéairement selon un mouvement de va-et-vient parallèle au trajet d'alimentation (A), et configuré pour saisir séquentiellement la bande (3) au niveau de parties successives de celle-ci ; et
- un élément de coupe (11) solidaire en mouvement de l'ensemble de préhension (10) et configuré pour couper séquentiellement la bande (3) lorsque celle-ci est saisie par l'ensemble de préhension (10) afin de déterminer la séparation séquentielle desdites parties successives de la bande (3) ;
dans lequel l'ensemble de préhension (10) comprend au moins une paire de rouleaux opposés (13 ; 13'), chacun présentant un axe longitudinal (X), disposés de part et d'autre du trajet d'alimentation (A) et pouvant être commandés entre une position ouverte, dans laquelle au moins l'un des rouleaux (13 ; 13') est espacé de la bande (3), et une position fermée, dans laquelle les rouleaux (13 ; 13') sont pressés l'un contre l'autre pour assurer la préhension de la bande (3) entre leurs surfaces longitudinales externes ;
et dans lequel au moins un rouleau (13 ; 13') de ladite paire de rouleaux (13 ; 13') peut être actionné en rotation autour de son axe longitudinal (X) pour entraîner un avancement de chaque partie de bande (3), préalablement séparée de la bande (3), le long du trajet d'alimentation (A).

2. Dispositif selon la revendication 1, dans lequel l'ensemble de préhension (10) et l'élément de coupe (11) sont mobiles, au moyen dudit mouvement linéaire de va-et-vient, entre une position rétractée et une position avancée ;
et dans lequel ledit au moins un rouleau (13 ; 13') peut être entraîné en rotation lorsque l'ensemble de préhension (10) est positionné entre la position rétractée et la position avancée ou lorsque l'ensemble de préhension (10) se trouve dans ladite position avancée.

3. - Dispositif selon la revendication 1 ou 2, dans lequel l'ensemble de préhension (10) comprend un premier actionneur (14) configuré pour commander la rotation d'un premier rouleau (13 ; 13') de ladite paire de rouleaux autour de son axe longitudinal (X), et un second actionneur (30) configuré pour commander le déplacement d'un second rouleau (13 ; 13') de ladite paire de rouleaux vers le premier rouleau (13 ; 13') et à l'écart de celui-ci afin de déterminer, respectivement, lesdites positions ouverte et fermée de la paire de rouleaux.

4. - Dispositif selon l'une quelconque des revendications précédentes, dans lequel l'ensemble de préhension (10) est mobile selon une direction transversale (T), transversale par rapport à ladite direction d'avance (D), l'ensemble de préhension (10) comprenant un suiveur de came (17) configuré pour coopérer avec un élément de came (16) afin de commander le déplacement de l'ensemble de préhension (10) le long de la direction transversale (T) ; en particulier, l'élément de coupe (11) est disposé en amont de l'ensemble de préhension (10), par rapport à ladite direction d'avance (D).

5. - Dispositif selon la revendication 4, et comprenant un chariot (12) portant l'ensemble de préhension (10) et l'élément de coupe (11) et mobile linéairement selon un mouvement de va-et-vient entre une position rétractée et une position avancée ;
dans lequel l'ensemble de préhension (10) est fixé au chariot (12) de manière coulissante au moyen d'un guide linéaire (19) parallèle à ladite direction transversale (T) ;
et dans lequel l'Dispositif (4) comprend des moyens élastiques (20) interposés de manière fonctionnelle entre le guide linéaire (19) et l'ensemble de préhension (10) pour guider ce dernier vers une position donnée le long de ladite direction transversale (T).

6. - Dispositif selon l'une quelconque des revendications précédentes, dans lequel chaque rouleau (13') de ladite paire de rouleaux est défini par deux demi-rouleaux (13a', 13b') disposés de manière adjacente l'un à l'autre le long de l'axe longitudinal respectif (X).

7. - Dispositif selon la revendication 6, dans lequel lesdits demi-rouleaux (13a', 13b') peuvent être actionnés en rotation autour de l'axe longitudinal respectif (X) indépendamment l'un de l'autre afin de commander un lacet de chaque partie de bande (3), préalablement séparée de la bande (3), par rapport à ladite direction d'avance (D).

8. - Dispositif selon la revendication 7, et comprenant au moins un capteur (18) disposé en aval de l'élément de coupe (11), par rapport à ladite direction d'avance (D), et configuré pour détecter séquentiellement des éléments de référence sur la bande (3), chacun étant disposé au niveau d'une partie respective de la bande (3), pour générer des signaux en corrélation avec chaque détection, et pour envoyer ces signaux à une unité de commande adaptée pour commander une rotation desdits demi-rouleaux (13a', 13b') sur la base desdits signaux.

9. - Dispositif selon l'une quelconque des revendications précédentes, dans lequel chaque rouleau (13 ; 13') de ladite paire de rouleaux est réalisé en fibre de carbone.

10. - Machine automatique (1) pour la fabrication de dispositifs de stockage d'énergie électrique, comprenant :
- une unité d'alimentation (2) destinée à alimenter au moins une bande (3) de matériau pour la fabrication des dispositifs de stockage le long d'un trajet d'alimentation (A) respectif et dans une direction d'avance (D) ;
- au moins un dispositif de coupe et de transport (4) selon l'une quelconque des revendications précédentes et disposé en aval de l'unité d'alimentation (2), par rapport à ladite direction d'avance (D) ; et
- une unité de laminage (5) disposée en aval de l'Dispositif de coupe et de transport (4), par rapport à ladite direction d'avance (D), et configurée pour recevoir la bande (3) de matériau et la laminer avec au moins une autre bande (3) de matériau pour la fabrication des dispositifs de stockage ;
dans laquelle ledit au moins un rouleau (13 ; 13') peut être entraîné en rotation autour de son axe longitudinal (X) pour faire avancer ladite partie de bande (3) préalablement séparée de la bande (3) et pour l'alimenter vers l'unité de laminage (5).

11. - Machine automatique selon la revendication 10, et comprenant un élément de came (16) mobile suivant une direction transversale (T) transversale à ladite direction d'avance (D) ;
l'ensemble de préhension (10) comprenant un suiveur de came (17) configuré pour coopérer avec l'élément de came (16) afin de commander un déplacement de l'ensemble de préhension (10) suivant ladite direction transversale (T) ;
ladite machine (1) comprenant une unité de commande et au moins un capteur (18) disposé en aval de l'élément de coupe (11), par rapport à ladite direction d'avance (D), et configuré pour détecter séquentiellement des éléments de référence sur la bande (3), chacun étant disposé au niveau d'une partie respective de la bande (3), pour générer des signaux en corrélation avec chaque détection, et pour envoyer ces signaux à l'unité de commande ;
dans laquelle l'unité de commande est configurée pour commander le déplacement de l'élément de came (16) suivant la direction transversale (T) sur la base desdits signaux.

12. - Machine automatique selon la revendication 10 ou 11, et comprenant au moins une autre paire de rouleaux opposés (21) disposée en aval du dispositif de coupe et de transport (4) et en amont de l'unité de laminage (5), par rapport à ladite direction d'avance (D), et configurée pour supporter chaque partie de bande (3), préalablement séparée de la bande (3), entre l'ensemble de préhension (10) et l'unité de laminage (5).

13. - Procédé de fabrication de dispositifs de stockage d'énergie électrique comprenant les étapes suivantes :
a) l'alimentation d'une bande (3) de matériau destinée à la fabrication des dispositifs de stockage le long d'un trajet d'alimentation (A) et dans une direction d'avance (D) ;
b) la préhension séquentielle de la bande (3) au niveau de parties successives de celle-ci ;
c) la coupe séquentielle de la bande (3), pendant l'étape de préhension b), afin de déterminer la séparation séquentielle desdites parties successives de la bande (3) ;
d) l'avancement de chaque partie de bande (3) préalablement séparée vers une unité de laminage (5) ;
dans lequel l'étape de préhension b) est réalisée en pressant l'un contre l'autre deux rouleaux opposés (13 ; 13') ;
et dans lequel l'étape d'avancement d) est réalisée par la rotation d'au moins l'un des deux rouleaux (13 ; 13') autour de son axe longitudinal (X).

14. - Procédé selon la revendication 13, comprenant l'étape suivante :
e) le déplacement, après l'étape de découpe c) et avant l'étape d'avancement d), des deux rouleaux (13 ; 13') suivant une direction transversale (T) transversale à la direction d'avance (D) afin d'ajuster un positionnement de chaque partie de bande (3), préalablement séparée de la bande (3), transversalement à la direction d'avance (D).

15. - Procédé selon la revendication 13 ou 14, dans lequel chacun des deux rouleaux (13') présente un axe longitudinal (X) et est défini par deux demi-rouleaux (13a', 13b') disposés de manière adjacente l'un à l'autre le long de l'axe longitudinal (X) ; le procédé comprenant l'étape suivante :
f) la rotation des deux demi-rouleaux (13a', 13b') autour de leur axe longitudinal respectif (X) indépendamment l'un de l'autre afin d'ajuster un lacet de chaque partie de bande (3), préalablement séparée de la bande (3), par rapport à ladite direction d'avance (D).
